# EUROPÄISCHE PATENTSCHRIFT

(11) **EP 1 149 249 B1**
(45) Veröffentlichungstag und Bekanntmachung des Hinweises auf die Patenterteilung: **23.06.2004**
(21) Anmeldenummer: 00987134.4
(22) Anmeldetag: 14.11.2000
(51) Int. Cl.: F16F 15/32, F16B 2/24

(54) **KLAMMER ZUM AUSWUCHTEN**
BALANCING CLIP
AGRAFE D'EQUILIBRAGE

(30) Priorität: 26.11.1999 DE 19957030
(43) Veröffentlichungstag der Anmeldung: 31.10.2001
(73) Patentinhaber: ROBERT BOSCH GMBH, 70442 Stuttgart (DE)
(72) Erfinder: SCHNEIDER, Ralf-Michael, 77836 Rheinmuenster (DE); HUBER, Martin, 77704 Oberkirch (DE); LULA, Cornelia, 77564 Offenburg (DE)
(86) Internationale Anmeldenummer: PCT/DE2000/004024
(87) Internationale Veröffentlichungsnummer: WO 2001/038753

(56) Entgegenhaltungen:
- DE-U- 9 102 865
- FR-A- 2 702 521
- US-A- 3 869 760
- US-A- 5 470 203
- US-A- 5 634 314

## Beschreibung

### Stand der Technik

Die Erfindung geht von einer Klammer zum Auswuchten nach dem Oberbegriff des Anspruchs 1 aus, siehe FR-A-2 702 521 oder US-A-5 470 203.

Bei rotierenden Körpern gleichen sich die Zentrifugalkräfte bezogen auf die Rotationsachse aus, sofern die Massen des rotierenden Körpers ausgeglichen sind. Nicht ausgeglichene Massen, z.B. auf Grund von Fertigungstoleranzen, verursachen umlaufende, radial wirkende Fliehkräfte, die die Lagerung in wechselnder Richtung zyklisch belasten. Da infolge der Elastizität des Werkstoffs und der Eigenmasse jedes Bauteil ein schwingungsfähiges Feder-Masse-System darstellt, kann es durch zyklische Kräfte zum Schwingen angeregt werden, wobei Erregungen im Bereich der Eigenfrequenz besonders störend sein können und zu Dauerschäden der Lager und anderer Bauteile führen können. Aus diesem Grund werden insbesondere an schnell rotierenden Körpern, z.B. Laufrädern von Lüftern, nach der Montage bestehende Unwuchten ermittelt und durch Wuchtgewichte ausgeglichen.

Um eine Unwucht auszugleichen, werden bei Radiallüftern an den relativ dünnen Laufschaufeln sogenannte Wuchtklammern befestigt. Es sind verschiedene Klammern bekannt, die aus Federstahlblech oder aus Runddraht bestehen und in der Regel von außen auf die Laufschaufeln des Lüfters aufgesteckt werden. Dabei sind die Klammern konstruktiv so gestaltet, daß sie die Laufschaufeln komplett umschließen oder Einsatzrastzacken besitzen, mit denen sie sich verkrallen. Allerdings ist für die Montage der Krallen mit Einsatzrastzacken ein erheblicher Kraftaufwand erforderlich. Ferner können sich die Klammern ineinander verhaken. Sie müssen dann vor der Montage aufwendig vereinzelt werden und können daher nur schwer in einen automatischen Prozeß eingebunden werden. Schließlich besteht die Gefahr, daß viele Klammern unter Einwirkung von äußeren Kräften während des Betriebs ihre Lage verändern oder sich lösen, so daß erneut Unwuchten entstehen, die zu Störungen führen. Das Bauteil muß dann ein weiteres Mal ausgewuchtet werden.

### Vorteile der Erfindung

Nach der Erfindung weist die Klammer zum Ausgleichen einer Unwucht mindesten eine an einem ihrer Schenkel angeformte Spitze auf, die zum Eingriff in den dünnwandig auslaufenden Teil in den Innenraum des u-förmigen Querschnittprofils ragt und zum Verbindungsteil der Schenkel hin geneigt verläuft.

Die Klammer kann axial oder radial montiert werden, indem sie elastisch so weit aufgebogen wird, daß die Schenkel mit der angeformten Spitze über den Körper mit dem dünnwandigen Teil, z.B. eine Laufschaufel, geschoben werden kann. Die Vorspannung der Klammer drückt die Spitze gegen die Laufschaufel, wobei sich die Spitze ein wenig in die Oberfläche der Laufschaufel einarbeitet. Wirken auf die Klammer nach außen Kräfte, z.B. Zentrifugalkräfte oder Stoßkräfte, werden die Schenkel der Klammer durch die Spitze vermehrt gespreitzt, so daß sich der Anpreßdruck der Spitze vergrößert und sich ihr Sitz verfestigt. Somit kann die Klammer weder ohne ein besonderes Werkzeug demontiert werden, noch unbeabsichtigt ihre einmal eingenommene Lage verändern.

Zweckmäßigerweise sind mehrere Spitzen an einem Schenkel axial versetzt zueinander angeordnet, die mit Spitzen am anderen Schenkel abwechseln. Im nicht montierten Zustand liegen die Spitzen des einen Schenkels in den Zwischenräumen zwischen den Spitzen des anderen Schenkels, so daß die Klammern bei einem großen Federweg für die Vorspannung wenig Platz im demontierten Zustand beanspruchen. Im montierten Zustand verkrallen sich die Spitzen von beiden Seiten in das dünnwandige Bauteil, die Laufschaufel, und verstärken so die durch die Vorspannung erzeugte Halterung in axialer und radialer Richtung.

An einem auszuwuchtenden Körper, z.B. an einer Laufschaufel, können die Klammern je nach Gestaltung des Körpers axial und/oder radial montiert werden. Sie werden so montiert, daß das Verbindungsteil und damit auch die Spitzen zum äußeren Umfang der Laufschaufel weisen. Die Fliehkraft vergrößert den Neigungswinkel der Spitzen zu den Schenkeln, wodurch die Klammer federnd aufgebogen wird und damit die Anpreßkraft gegen die Laufschaufel verstärkt. Auch axial wirkenden Kräften wird durch eine dreieckige Form der Spitzen ein entsprechend verstärkter Widerstand entgegengesetzt. Die Klammer ist damit in ihrer Lage stabil fixiert und läßt sich demzufolge nicht ohne Hilfsmittel vom Lüfter abziehen. Das ist für die weitere Verwendung bis zur Systemkomplettierung wichtig, da eine abgerissene oder verschobene Klammer eine Nacharbeit durch nochmaliges Auswuchten erfordern würde.

Um die Klammer auch gut montieren zu können, wird das Verhältnis zwischen der Haltekraft und der Aufschiebekraft dadurch modifiziert, daß die Gestalt der Spitzen und ihre Neigung zu den Schenkeln den Einbauverhältnissen angepaßt werden.

Die Form der erfindungsgemäßen Klammer ist so gewählt, daß die Spitzen im unmontierten Zustand in den u-förmigen Innenraum ragen und gegebenenfalls in die jeweils gegenüberliegende Kontur eintauchen. In den zugehörigen Schenkeln sind dafür axiale Einbuchtungen vorgesehen. Die Einbuchtungen überragen die Spitzen in vertikaler und in horizontaler Richtung, so daß die Spitzen immer von benachbarten Teilen der äußeren Kontur der Klammer abgedeckt sind. Vorteilhaft wird der Randbereich eines Schenkels nach außen gebogen, um gegebenenfalls eine durch dessen Einbuchtung ragende Spitze abzudecken. So wird verhindert, daß sich die losen Klammern vor der Montage ineinander verhaken. Ferner lassen sie sich gut vereinzeln und sind daher besonders gut für automatische Fertigungsprozesse geeignet. Um die Klammern einfach automatisch vereinzeln und ausrichten zu können, ist es zweckmäßig, daß die Schenkel ungleichmäßig lang sind.

In einer Ausgestaltung der Erfindung weisen die Klammern Ausnehmungen auf. Durch Größe, Gestalt und/Lage der Ausnehmungen oder der Kontur der Klammern lassen sich viele Varianten ähnlicher Klammern mit unterschiedlichen Massen und Massenverteilungen herstellen. Dadurch können die Klammern für viele Anwendungsfälle eingesetzt werden, z.B. für Lüfter unterschiedlicher Größen usw.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Vorderansicht eines Lüfters vor dem Auswuchten entsprechend dem Pfeil I in Fig. 2,
- Fig. 2: einen Schnitt entsprechend einer Linie II-II in Fig. 1,
- Fig. 3: einen vergrößerten Ausschnitt entsprechend der Linie III in Fig. 1 mit einer montierten Klammer,
- Fig. 4: eine Vorderansicht einer erfindungsgemäßen. Klammer,
- Fig. 5: eine Seitenansicht eines Schenkels der Klammer nach Fig. 4 von rechts mit ungebogenen Spitzen,
- Fig. 6: eine Seitenansicht eines Schenkels der Klammer nach Fig. 4 von links mit ungebogenen Spitzen,
- Fig. 7: eine Variante zu Fig. 4,
- Fig. 8: eine Variante zu Fig. 5 und
- Fig. 9: eine Variante zu Fig. 6.

### Beschreibung der Ausführungsbeispiele

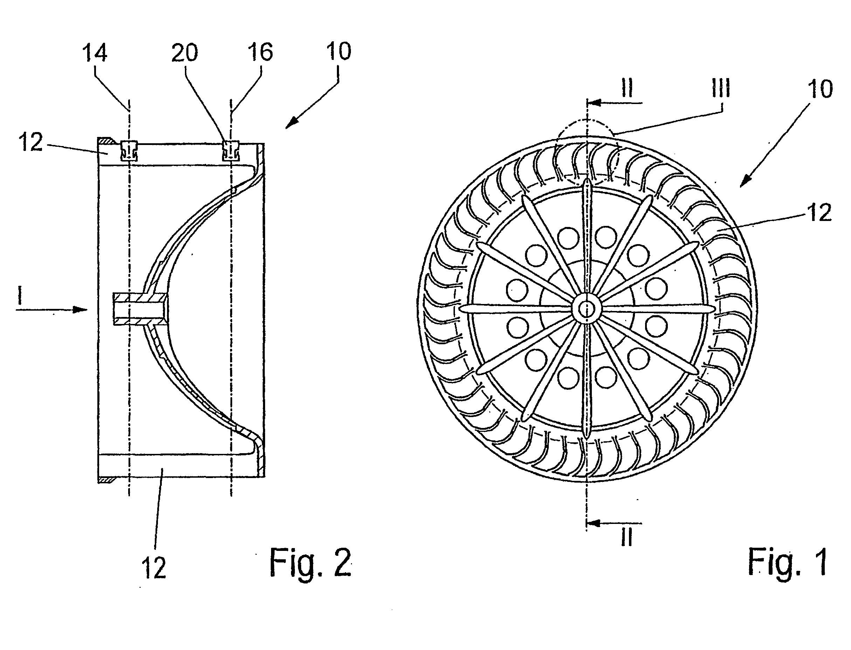

In Fig. 1 ist ein Laufrad 10 eines Lüfters von vorn und vor dem Auswuchten dargestellt. Am Umfang weist es eine Vielzahl von Laufschaufeln 12 auf. Beim Auswuchten wird zuerst die Unwucht des Laufrads 10 in den Ebenen 14 und 16 gemessen. Anschließend wird ausgehend von den Meßergebnissen in der Ebene 14 und/oder in der Ebene 16 mindestens eine Klammer 20 angebracht, um dadurch einen Masseausgleich zu erreichen.

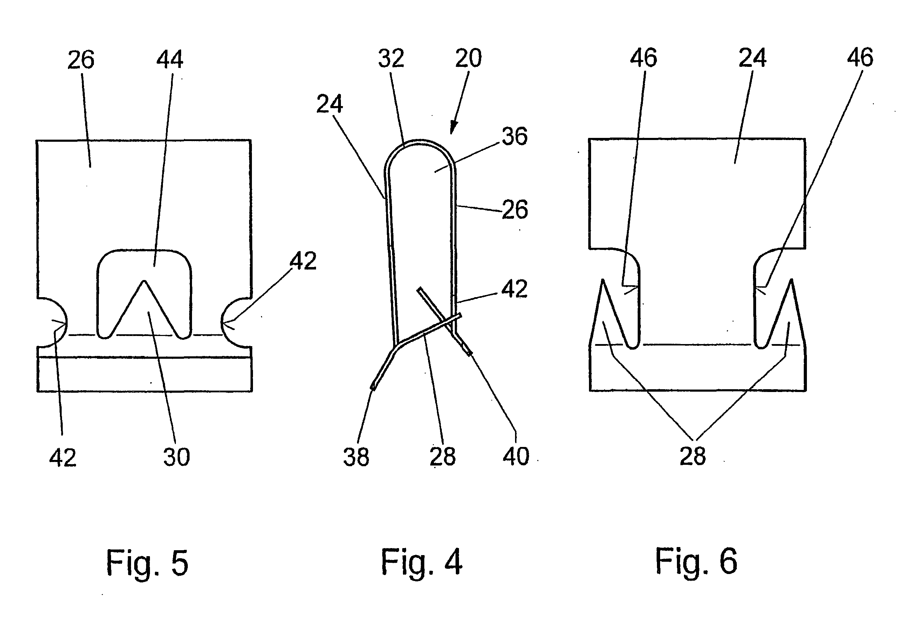

Die Klammer 20 weist ein u-förmiges Querschnittprofil mit Schenkeln 24 und 26 auf, die über ein Verbindungsteil 32 miteinander verbunden sind und einen u-förmigen Innenraum 36 einschließen (Fig. 4). Vom Verbindungsteil 32 aus verlaufen die Schenkel 24 und 26 leicht konisch zueinander und ihre Randbereiche 38 bzw. 40 sind nach außen gebogen. Eine am Schenkel 26 angeformte Spitze 30 ist in den u-förmigen Innenraum 36 gebogen und zwar so, daß sie zum gegenüberliegenden Schenkel 24 und in Richtung zum Verbindungsteil 32 weist. Zwei am Schenkel 24 angeformte Spitzen 28 sind axial zueinander versetzt und ebenfalls in gleicher Weise in den u-förmigen Innenraum 36 gebogen. Sie tauchen in axiale Einbuchtungen 42 des Schenkels 26 ein. Dabei ragen die Spitzen 28 im unmontierten Zustand teilweise durch die Einbuchtungen 42, werden allerdings in Außenbereich der Klammer 20 durch den nach außen gebogenen Randbereich 40 des Schenkels 26 abgedeckt. Die Fig. 5, eine Seitenansicht des Schenkels 26, zeigt den Schenkel 26 mit der Spitze 30 im ungebogenen Zustand. Der Schenkel 26 kann eine symmetrische Form besitzen und hat in der Mitte die Spitze 30. Sie liegt in einer Ausnehmung 44 und besitzt die Form eines gleichschenkligen Dreiecks, dessen eine Seite mit dem Randbereich 40 des Schenkels 26 verbunden ist. Axial versetzt und zu beiden Seiten der Spitze 30 sind die Einbuchtungen 42 ausgeformt.

Eine andere Seitenansicht der Klammer 20 zeigt den Schenkel 24 mit Spitzen 28 in einem ungebogenen Zustand (Fig. 6). Der Schenkel 24 besitzt zwei seitlich angeordnete Spitzen 28. In bezug auf die Spitze 30 sind die Spitzen 28 axial zum linken und rechten Rand der Klammer 20 versetzt, so daß sich die Spitzen 28 bzw. 30 an den gegenüberliegenden Schenkeln 24 und 26 abwechseln und im nicht montierten Zustand teilweise überdecken. Die Spitzen 28 werden von Einbuchtungen 46 umgeben, welche die Spitzen 28 in vertikaler und in horizontaler Richtung abdecken.

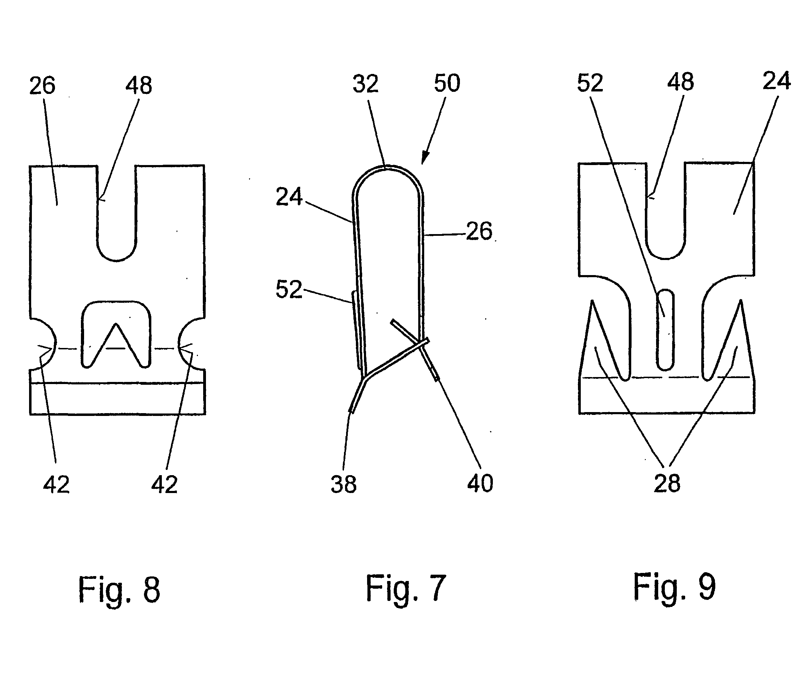

Zweckmäßigerweise ist die Klammer 20 aus einem federnden Blech gestanzt und anschließend gebogen, wobei die Schenkel 24 und 26 unterschiedliche Längen aufweisen. Die nach innen gebogenen Spitzen 28 und 30 verschließen den u-förmigen Innenraum 36 am Ende der Schenkel 24 und 26. Somit entsteht eine relativ geschlossene Kontur der Klammer 20, die für die Automatisierung des Auswuchtvorgangs sehr wichtig ist. Fig. 7 zeigt eine Variante der Erfindung, wobei sich eine Klammer 50 durch ein anderes Gewicht von der Klammer 20 unterscheidet. Die Klammer 50 ist kleiner und besitzt am Schenkel 24 zur Versteifung eine Sicke 52. Gleichzeitig weist sie eine schlitzförmige Ausnehmung 48 auf, die mittig angeordnet ist und vom Schenkel 24 über das Verbindungsteil 32 zum anderen Schenkel 26 reicht (Fig. 8, Fig. 9).

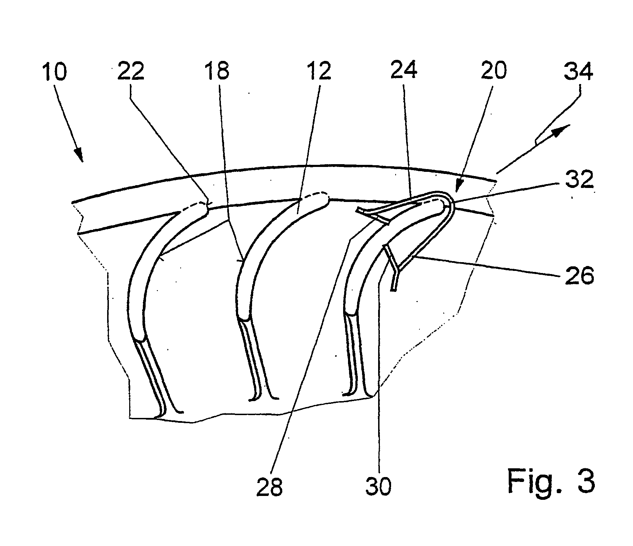

Die dünnwandigen Laufschaufeln 12 können unterschiedlich gebogene Formen besitzen, wobei sie großflächige, breite Umlenkflächen 18 und eine schmale Abströmfläche 22 aufweisen. Die Klammer 20 wird von der schmalen Abströmfläche 22 aus in axialer Richtung über die Laufschaufel 12 in Höhe der Ebene 14 und/oder 16 gebracht (Fig. 3). Dazu werden die Schenkel 24 und 26 soweit elastisch gespreizt, bis sie leicht axial oder radial auf die Laufschaufel 12 geschoben werden können. Die an ihnen angeformten und nach innen gebogenen Spitzen 28 und 30 drücken sich durch die Federkraft der Schenkel 24, 26 sowie des Verbindungsteils 32 in das Material der Laufschaufel 12 ein. Die Federkraft wird bestimmt durch die Materialstärke und die Größe der Klammer 20 sowie den Federweg, der erforderlich ist, um die Schenkel 24, 26 mit den Spitzen 28, 30 über die Laufschaufel 12 zu schieben. Die Spitzen 28 und 30 weisen in Richtung auf das Verbindungsteil 32, so daß eine nach außen wirkende Fliehkraftkomponente 34 die Spitzen 28, 30 vermehrt spreizt und den Anpreßdruck der Spitzen 28, 30 erhöht, wodurch diese noch tiefer ins Material der Laufschaufel 12 eindringen und den Sitz stabilisieren. Das Gleiche gilt für Schlag- und Stoßkräfte, die in diese Richtung wirken.

### Bezugszeichen

- 10: Laufrad
- 12: Laufschaufel
- 14: Ebene
- 16: Ebene
- 18: Umlenkfläche
- 20: Klammer
- 22: Abströmfläche
- 24: Schenkel
- 26: Schenkel
- 28: Spitze
- 30: Spitze
- 32: Verbindungsteil
- 34: Fliehkraftkomponente
- 36: Innenraum
- 38: Randbereich
- 40: Randbereich
- 42: Einbuchtung
- 44: Ausnehmung
- 46: Einbuchtung
- 48: Ausnehmung
- 50: Klammer
- 52: Sicke

## Patentansprüche

1. Klammer (20, 50) zum Auswuchten, die am Umfang eines dünnwandig auslaufenden Teils (12) eines rotierenden Körpers (10) angebracht werden kann und ein u-förmiges Querschnittprofil aufweist, **dadurch gekennzeichnet, daß** die Klammer (20, 50) mindestens eine an einem ihrer Schenkel (24, 26) angeformte Spitze (28, 30) aufweist, die zum Eingriff in den dünnwandig auslaufenden Teil (12) in den Innenraum (36) des u-förmigen Querschnittprofils ragt und zum Verbindungsteil (32) der Schenkel (24, 26) hin geneigt verläuft.

2. Klammer (20, 50) nach Anspruch 1, **dadurch gekennzeichnet, daß** sie aus einem Blech gestanzt ist und die Spitzen (28, 30) nach innen zum gegenüberliegenden Schenkel (24, 26) hin gebogen sind.

3. Klammer (20, 50) nach Anspruch 2, **dadurch gekennzeichnet, daß** an einem Schenkel (24, 26) mehrere axial versetzte Spitzen (28, 30) angeordnet sind, die mit Spitzen (28, 30) an den gegenüberliegenden Schenkeln (24, 26) abwechseln.

4. Klammer (20, 50) nach Anspruch 3, **dadurch gekennzeichnet, daß** die Spitzen (28, 30) im unmontierten Zustand in die jeweils gegenüberliegende Kontur eintauchen.

5. Klammer (20, 50) nach Anspruch 4, **dadurch gekennzeichnet, daß** die Spitzen (28, 30) an einer axialen Einbuchtung (46) bzw. Ausnehmung (44) der zugehörigen Schenkel (24) liegen und im abgebogenen Zustand in eine Einbuchtung (42) des gegenüberliegenden Schenkels (26) eingreifen.

6. Klammer (20, 50) nach Anspruch 5, **dadurch gekennzeichnet, daß** die Spitze (28, 30) von benachbarten Teilen der Klammer (20, 50) abgedeckt ist.

7. Klammer (20, 50) nach einem der vorhergehenden Ansprüche, **dadurch gekennzeichnet, daß** die Schenkel (24, 26) des u-förmigen Querschnittprofils unterschiedlich lang sind.

8. Klammer (20, 50) nach Anspruch 7, **dadurch gekennzeichnet, daß** der Randbereich (38, 40) der Schenkel (24, 26) nach außen gebogen ist.

9. Klammer (20, 50) nach einem der vorhergehenden Ansprüche, **dadurch gekennzeichnet, daß** die Klammer (20, 50) mindestens eine Ausnehmung (48) aufweist.

## Claims

1. Balancing clip (20, 50) which can be attached to the periphery of a part (12), ending in a thin wall, of a rotating body (10) and has a U-shaped cross-sectional profile, **characterized in that** the clip (20, 50) has at least one point (28, 30) which is integrally formed on one of its legs (24, 26) and which, for engaging in the part (12) ending in a thin wall, projects into the interior space (36) of the U-shaped cross-sectional profile and runs inclined towards the connecting part (32) of the legs (24, 26).

2. Clip (20, 50) according to Claim 1, **characterized in that** it is punched from a metal sheet and the points (28, 30) are bent inwards towards the opposite leg (24, 26).

3. Clip (20, 50) according to Claim 2, **characterized in that** a plurality of axially offset points (28, 30) are arranged on one leg (24, 26) and alternate with points (28, 30) on the opposite legs (24, 26).

4. Clip (20, 50) according to Claim 3, **characterized in that** the points (28, 30) plunge in the unfitted state into the respective opposite contour.

5. Clip (20, 50) according to Claim 4, **characterized in that** the points (28, 30) lie at an axial niche (46) or aperture (44), respectively, of the associated legs (24) and engage in the bent state in a niche (42) of the opposite leg (26).

6. Clip (20, 50) according to Claim 5, **characterized in that** the point (28, 30) is covered by adjacent parts of the clip (20, 50).

7. Clip (20, 50) according to one of the preceding claims, **characterized in that** the legs (24, 26) of the U-shaped cross-sectional profile have different lengths.

8. Clip (20, 50) according to Claim 7, **characterized in that** the marginal region (38, 40) of the legs (24, 26) is bent outwards.

9. Clip (20, 50) according to one of the preceding claims, **characterized in that** the clip (20, 50) has at least one aperture (48).

## Revendications

1. Agrafe d'équilibrage (20, 50) pouvant être montée à la périphérie d'une partie (12) se terminant par une paroi mince d'un corps (10) en rotation, et présentant un profil de section transversale en forme de U,
**caractérisée en ce que**
l'agrafe (20, 50) présente au moins une pointe (28, 30) formée sur l'une de ses branches (24, 26) qui, pour s'engager dans la partie (12) se terminant par une paroi mince, pénètre dans l'espace intérieur (36) du profil de section transversale en forme de U et s'étend de manière inclinée en direction de la partie de jonction (32) des branches (24, 26).

2. Agrafe (20, 50) selon la revendication 1,
**caractérisée en ce qu'**
elle est découpée à partir d'une tôle et que les pointes (28, 30) sont pliées vers l'intérieur en direction de la branche (24, 26) opposée.

3. Agrafe (20, 50) selon la revendication 2,
**caractérisée en ce que**
sur l'une des branches (24, 26) plusieurs pointes (28, 30) axialement décalées sont disposées, en alternance avec des pointes (28, 30) situées aux branches (24, 26) opposées.

4. Agrafe (20, 50) selon la revendication 3,
**caractérisée en ce qu'**
à l'état non monté les pointes (28, 30) plongent dans le contour respectivement opposé.

5. Agrafe (20, 50) selon la revendication 4,
**caractérisée en ce que**
les pointes (28, 30) se situent dans un creux (46) ou un évidement (44) axial des branches (24) associées et, à l'état plié, s'engagent dans un creux (42) de la branche opposée (26).

6. Agrafe (20, 50) selon la revendication 5,
**caractérisée en ce que**
la pointe (28, 30) est recouverte par des parties voisines de l'agrafe (20, 50).

7. Agrafe (20, 50) selon l'une quelconque des revendications précédentes,
**caractérisée en ce que**
les branches (24, 26) du profil de section transversale en forme de U présentent des longueurs différentes.

8. Agrafe (20, 50) selon la revendication 7,
**caractérisée en ce que**
la zone périphérique (38, 40) des branches est pliée vers l'extérieur.

9. Agrafe (20, 50) selon l'une quelconque des revendications précédentes,
**caractérisée en ce que**
l'agrafe (20, 50) présente au moins un évidement (48).
